# FASCICULE DE BREVET EUROPEEN

(11) **EP 1 694 178 B1**
(45) Date de publication et mention de la délivrance du brevet: **03.03.2010**
(21) Numéro de dépôt: 04791559.0
(22) Date de dépôt: 15.10.2004
(51) Int. Cl.: A47J 27/08

(54) **JOINT A LEVRES POUR APPAREIL DE CUISSON ET APPAREIL DE CUISSON EQUIPE D`UN TEL JOINT**
LIPPENDICHTUNG FÜR EIN KOCHGERÄT UND MIT DER DICHTUNG VERSEHENES KOCHGERÄT
LIP SEAL FOR A COOKING APPLIANCE AND A COOKING APPLIANCE PROVIDED WITH SAID SEAL

(30) Priorité: 27.11.2003 FR 0313935
(43) Date de publication de la demande: 30.08.2006
(73) Titulaire: SEB S.A., 69132 Ecully Cedex (FR)
(72) Inventeur: SEURAT GUIOCHET, Claire, Marie-Aurore, F-21000 Dijon (FR); CARTIGNY, Michel, Pierre, F-21310 Mirebeau-sur-Bèze (FR); ANOTA, Daniel, Jean-Marie, F-21000 Dijon (FR)
(74) Mandataire: Martin, Didier Roland Valéry
(86) Numéro de dépôt international: PCT/FR2004/002648
(87) Numéro de publication internationale: WO 2005/063087

(56) Documents cités:
- FR-A3- 2 811 398
- US-A- 4 434 909
- US-A1- 2003 024 936

## Description

### DOMAINE TECHNIQUE

La présente invention se rapporte au domaine technique général des appareils domestiques de cuisson comportant une cuve et un couvercle entre lesquels est interposé un joint destiné à assurer l'étanchéité entre le couvercle et la cuve au cours du processus de cuisson, et en particulier l'étanchéité à la vapeur lorsque l'appareil est un appareil de cuisson sous pression, du genre autocuiseur, destiné à assurer la cuisson sous pression de vapeur des aliments contenus dans la cuve.

La présente invention concerne plus particulièrement un joint à lèvres destiné à être monté entre le couvercle et la cuve d'un appareil de cuisson pour assurer l'étanchéité entre lesdits couvercle et cuve, ledit joint comprenant au moins une première et une deuxième lèvres reliées par un talon, lesdits lèvres et talon étant susceptibles de définir, lorsque les lèvres sont amenées l'une contre l'autre, un espace interstitiel fermé.

Un tel joint à lèvre est par exemple décrit dans le brevet US 4 434 909

La présente invention concerne également un appareil de cuisson équipé d'un tel joint.

### TECHNIQUE ANTERIEURE

II est déjà connu de prévoir d'équiper des appareils de cuisson, tels que des autocuiseurs, avec un joint d'étanchéité annulaire réalisé en un matériau élastomère déformable, afin d'assurer l'étanchéité entre la cuve et le couvercle lors de la mise en pression de l'appareil, en vue de former une enceinte de cuisson étanche.

Les joints habituellement mis en oeuvre dans le domaine des autocuiseurs présentent une section transversale en U, l'âme du U formant un talon à partir duquel s'étendent une première et une deuxième lèvres formant respectivement les bras du U.

Ces joints d'étanchéité connus, s'ils donnent généralement satisfaction, présentent cependant certains inconvénients.

Ainsi, dans certaines situations, l'autocuiseur peut se trouver en dépression, c'est-à-dire que sa pression interne est inférieure à la pression atmosphérique. Une telle mise en dépression peut notamment se produire lorsque l'autocuiseur, à l'issue d'un cycle de cuisson sous pression, est refroidi sans avoir été au préalable décompressé, c'est-à-dire sans que l'intérieur de l'enceinte n'ait été mis en communication avec l'extérieur.

Cette mise en dépression de l'enceinte de cuisson conduit à 1'« *aspiration* » du couvercle contre la cuve, ainsi que des lèvres du joint l'une contre l'autre.

Lorsque l'utilisateur ramène par la suite la pression régnant dans l'enceinte au niveau de la pression atmosphérique, par la mise en communication de l'intérieur de l'enceinte avec l'extérieur, il peut alors sans difficulté séparer le couvercle de la cuve.

En revanche, on constate fréquemment que malgré cette mise en communication de l'intérieur de l'enceinte avec l'extérieur, les deux lèvres du joint restent « *collées* » l'une contre l'autre sur tout le périmètre du joint. Dans cette configuration de « *collage* », le joint présente bien évidemment une conformation anormale qui rend le joint impropre à assurer l'étanchéité de l'appareil de cuisson lors d'un cycle de cuisson ultérieur.

Ce phénomène de *« collage »* des lèvres l'une contre l'autre provient semble-t-il de la création, alors que l'appareil était en dépression, d'une cavité annulaire dépressionnaire entre les deux lèvres, cavité rendue étanche par le contact des lèvres l'une contre l'autre.

Une majorité d'utilisateurs ignorent généralement les causes de ce phénomène de *« collage »,* en particulier car lesdits utilisateurs n'ont parfois même pas eu conscience que leur autocuiseur avait pendant un instant été en dépression.

En définitive, l'utilisateur qui retrouve son joint ainsi « *collé* » pense généralement que le joint a été abîmé lors de la cuisson, et/ou présente un défaut de fabrication ou de conception. Dans les cas, moins fréquents, où l'utilisateur a au contraire compris qu'un phénomène de dépression était à l'origine du *« collage »* de son joint, il peut, en introduisant un outil effilé, tel qu'un tournevis, à la jonction des deux lèvres, tenter de séparer ces dernières. Une telle manoeuvre est cependant peu satisfaisante du point de vue de la facilité et de la sécurité d'utilisation d'un autocuiseur, puisqu'elle peut conduire à endommager le joint ou à blesser l'utilisateur.

On notera enfin que ce problème de *« collage »* des lèvres du joint est particulièrement prégnant pour les appareils dont le couvercle est inséré à coulissement dans la cuve, ledit couvercle présentant un bord tombant qui est encerclé latéralement par la paroi de cuve lorsque le couvercle est ramené sur ladite cuve. II semble en effet que la faculté de coulissement du couvercle dans la cuve propre à ce type particulier d'autocuiseur puisse générer un écrasement important du joint, écrasement qui augmente le risque d'occurrence du « *collage* » des lèvres.

### EXPOSE DE L'INVENTION

Les objets assignés à l'invention visent en conséquence à porter remède aux différents inconvénients de l'art antérieur mentionnés précédemment et à proposer un nouveau joint à lèvres destiné à être monté entre le couvercle et la cuve d'un appareil de cuisson permettant d'éviter tout phénomène de « *collage* » des lèvres, tout en étant de conception particulièrement simple et bon marché.

Un autre objet de l'invention vise à proposer un nouveau joint à lèvres destiné à être monté entre le couvercle et la cuve d'un appareil de cuisson qui soit particulièrement facile à fabriquer.

Un autre objet de l'invention vise à proposer un nouveau joint à lèvres destiné à être monté entre le couvercle et la cuve d'un appareil de cuisson dont l'aspect visuel est très proche de celui d'un joint standard de l'art antérieur.

Un autre objet de l'invention vise à proposer un nouvel appareil de cuisson, et en particulier un nouvel appareil de cuisson à couvercle rentrant, qui présente un caractère particulièrement fiable et stable même après avoir subi une mise en dépression.

Les objets assignés à l'invention sont atteints à l'aide d'un joint à lèvres selon les caractéristiques de la revendication 1.

Les objets assignés à l'invention sont également atteints à l'aide d'un appareil de cuisson comportant une cuve et un couvercle destinés à être rapportés sur ladite cuve pour former une enceinte de cuisson, un joint conforme à l'invention étant monté entre lesdits cuve et couvercle.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés à titre d'exemples illustratifs et non limitatifs dans lesquels :
La figure 1 illustre, selon une vue générale en perspective, un appareil de cuisson sous pression à couvercle rentrant conforme à l'invention.
La figure 2 illustre, selon une vue en coupe, un détail de l'appareil représenté à la figure 1, ledit appareil étant équipé d'un joint à lèvres conforme à un premier mode de réalisation de l'invention.
La figure 3 illustre, selon une vue partielle en coupe transversale, un détail du joint à lèvres illustré à la figure 2.
La figure 4 illustre, selon une vue schématique de dessous, le joint de la figure 3.
La figure 5 illustre, selon une vue schématique de dessous, une portion du joint des figures 2 à 4 lorsqu'il subit un effort plaquant ses lèvres l'une contre l'autre.
La figure 6 illustre, selon une vue en coupe transversale, un joint conforme à l'invention dont les lèvres sont amenées l'une contre l'autre sous l'effet d'une sollicitation externe, résultant par exemple d'une mise en dépression de la cuve.
La figure 7 illustre, selon une vue schématique de dessous, un deuxième mode de réalisation du joint conforme à l'invention.
La figure 8 illustre, selon une vue schématique de dessous, un troisième mode de réalisation du joint conforme à l'invention.
La figure 9 illustre, selon une vue partielle en coupe transversale, un détail d'un joint à lèvres conforme à un quatrième mode de réalisation de l'invention.
La figure 10 illustre, selon une vue schématique de dessous, une portion du joint de la figure 9, lorsqu'il subit un effort plaquant ses lèvres l'une contre l'autre.
La figure 11 illustre, selon une vue schématique de dessous, le joint représenté aux figures 9 et 10.

### MEILLEURE MANIERE DE REALISER L'INVENTION

L'invention concerne un joint à lèvres 1 destiné à être monté entre le couvercle 2 et la cuve 3 d'un appareil de cuisson 4, lequel est de préférence conçu pour un usage domestique.

Le joint 1 assure l'étanchéité entre le couvercle 2 et la cuve 3, de sorte que l'appareil de cuisson 4 forme ainsi une enceinte de cuisson sensiblement fermée lorsque le couvercle 2 est rapporté sur la cuve 3, en vue d'assurer la cuisson en atmosphère confinée des aliments placés au sein de l'enceinte, dans la cuve 3.

Avantageusement, le joint 1 présente une forme générale annulaire, de préférence de contour sensiblement circulaire. II est cependant tout à fait envisageable, sans pour autant que l'on sorte du cadre de l'invention, que le joint 1 présente une autre forme, et en particulier ne s'étende pas selon un contour fermé.

Le joint 1 conforme à l'invention comprend au moins une première et une deuxième lèvres 1A, 1B reliées par un talon 1C. II est par ailleurs tout à fait envisageable que le joint 1 comporte plus de deux lèvres, sans pour autant que l'on sorte du cadre de l'invention.

Les lèvres 1A, 1B présentent, comme cela est bien connu de l'homme du métier, un caractère flexible, afin de remplir leur fonction d'étanchéité en coopération avec le talon 1C.

De façon avantageuse, les première et deuxième lèvres 1B, 1C sont réalisées en un matériau souple tel qu'un matériau élastomère.

De façon encore plus préférentielle, l'ensemble du joint 1 est réalisé en un matériau élastomère et forme une pièce monobloc, les première et deuxième lèvres 1A, 1B venant de matière avec le talon 1C.

Avantageusement, l'appareil de cuisson 4 conforme à l'invention est un appareil de cuisson sous pression, tel qu'un autocuiseur. Dans ce cas, qui correspond à celui qui va être décrit dans ce qui suit, le joint à lèvres 1 est monté entre le couvercle 2 et la cuve 3 pour assurer l'étanchéité à la pression entre lesdits couvercles de la cuve 3, de façon à ce que l'appareil 4 forme une enceinte de cuisson sensiblement étanche à la vapeur.

De façon classique, la cuve 3 forme un récipient de cuisson et présente de façon préférentielle sensiblement une symétrie de révolution selon un axe vertical X-X'. Dans ce qui suit, les adjectifs « *vertical* » et « *axial* » se référeront à la direction de cet axe X-X'.

La cuve 3 est par exemple réalisée à partir d'un matériau métallique tel que l'acier inoxydable, et est pourvue d'une paroi latérale 3A s'étendant globalement dans la direction verticale à partir d'un fond 3B, lequel est par exemple de forme sensiblement circulaire.

Ladite paroi latérale 3A s'étend à partir du fond 3B jusqu'à un rebord d'entrée 3C délimitant une ouverture supérieure par laquelle l'utilisateur est en mesure d'introduire les aliments à cuire dans la cuve 3, et au niveau de laquelle est destinée à être rapporté le couvercle 2. Ainsi, lorsque l'appareil 4 est en configuration de fonctionnement, c'est à dire lorsque le couvercle 2 est rapporté sur la cuve, la cuve 3 s'étend globalement selon la direction axiale X-X' entre le fond 3B et le couvercle 2.

Le rebord d'entrée 3C se présente de préférence sous la forme .d'un bord roulé ou replié.

La paroi latérale 3A présente une face interne 30, située en regard de l'intérieur de la cuve 3.

La cuve 3 peut comporter également des organes de préhension, telles que des poignées 3D, 3E, préférentiellement au nombre de deux, et fixés par exemple sur la cuve 3 de façon diamétralement opposée.

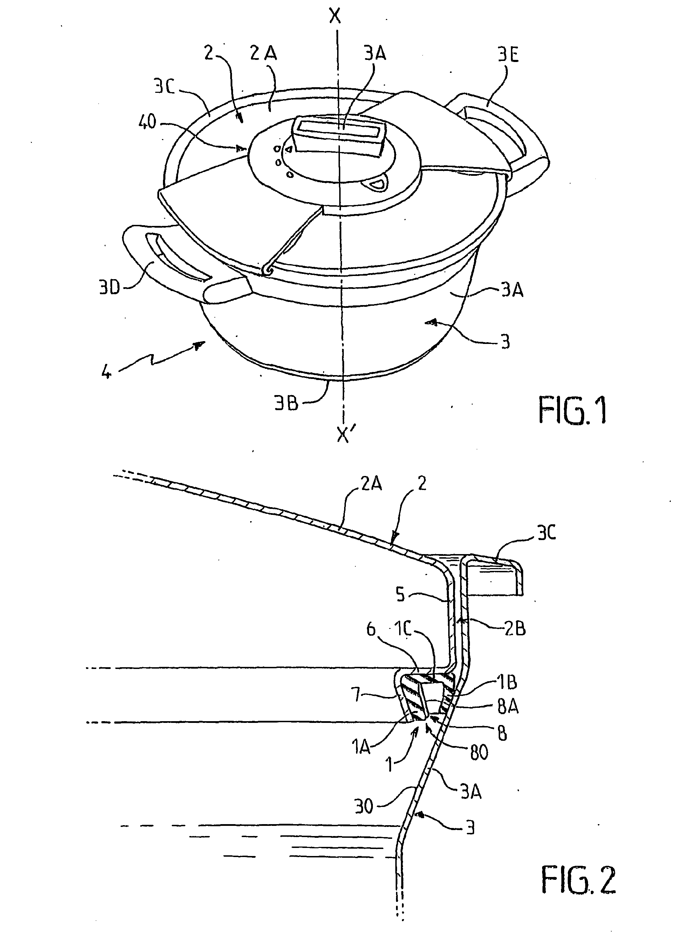

Le joint 1 conforme à l'invention est préférentiellement destiné à être monté dans un appareil de cuisson 4 dont le couvercle 2 est à bord tombant interne, c'est-à-dire dont le couvercle 2 est inséré dans la cuve 3 de façon à être entouré latéralement par cette dernière, tel que cela est illustré aux figures 1 et 2.

De manière préférentielle, le couvercle 2 comprend ainsi une paroi supérieure 2A, par exemple de forme générale discoïde sensiblement bombée, à partir et en périphérie de laquelle s'étend sensiblement verticalement un bord tombant latéral 2B, formant une couronne d'axe de symétrie X-X'. Le bord tombant latéral 2B est destiné à être inséré à l'intérieur de la cuve 3 lorsque le couvercle 2 est rapporté sur cette dernière. Cela signifie que le bord tombant latéral 2B est alors sensiblement entouré par la face interne 30 de la paroi latérale 3A de la cuve 3, justifiant le fait que le couvercle 2 peut être désigné par l'appellation « *couvercle à bord tombant interne* ».

De manière préférentielle, le joint 1 est interposé entre le bord tombant latéral 2B et la paroi latérale 3A, tel que cela est illustré à la figure 2. A cette fin, le bord tombant latéral 2B présente avantageusement, en section transversale, un décrochement formant un logement pour le joint 1. Ce décrochement est par exemple formé par la combinaison d'un premier bord 5, s'étendant sensiblement parallèlement à la direction verticale X-X' lorsque le couvercle 2 est mis en place dans la cuve 1, d'un deuxième bord 6, formant un bord rentrant s'étendant de manière centripète à partir du premier bord 5 et de façon sensiblement perpendiculaire à ce dernier, et enfin d'un troisième bord 7 s'étendant sensiblement vers le bas et vers l'extérieur de l'appareil 1 lorsque le couvercle 2 est en place dans la cuve 1, c'est-à-dire selon une direction légèrement oblique par rapport à la direction verticale X-X'. Le troisième bord 7 forme ainsi une bague destinée à être encerclée par le joint 1, tandis que le deuxième bord 6 forme un rebord d'appui pour ledit joint 1.

En d'autres termes, le joint 1, lorsqu'il est monté dans l'appareil 4, vient enserrer le troisième bord 7 par sa première lèvre 1A, tandis que le talon 1C vient en appui plan contre le deuxième bord 6.

Tel que cela est représenté aux figures, le joint 1 présente avantageusement une section transversale sensiblement en forme de U, les bras du U formant chacun respectivement les première et deuxième lèvres 1A, 1B, l'âme du U formant le talon 1C.

Avantageusement, le joint 1 est conformé de telle sorte que lorsqu'il est monté en position de fonctionnement entre lesdits couvercle 2 et cuve 3, tel que cela est représenté à la figure 2, les première et deuxième lèvres 1A, 1B s'étendent en direction du fond 3A de l'appareil.

Avantageusement, tel que cela est notamment visible à la figure 2, la première lèvre 1A s'inscrit globalement dans un premier tronc de cône dont le sommet se trouve sensiblement sur l'axe X-X', au dessus du troisième bord 7. Avantageusement, tel que cela est notamment visible à la figure 2, la deuxième lèvre 1B s'inscrit globalement dans un deuxième tronc de cône dont le sommet se trouve sensiblement sur l'axe X-X', au dessous du troisième bord 7.

De manière préférentielle, le joint 1 présente ainsi sensiblement une forme générale de révolution, laquelle forme correspond à la rotation de la section transversale en U autour d'un axe de révolution sensiblement parallèle au premier et/ou au deuxième bras du U. Dans le cas particulier du joint 1 représenté aux figures, la forme du joint correspond à la rotation de la section transversale en U autour de l'axe X-X', l'âme du U, à partir de laquelle est généré le talon 1C, étant sensiblement perpendiculaire à l'axe X-X'. Ainsi, le joint 1 conforme à l'invention présente préférentiellement un talon 1C appartenant à un plan unique et à partir duquel est généré un premier ruban globalement circulaire correspondant à la première lèvre 1A, et un deuxième ruban globalement circulaire concentrique au premier ruban circulaire et formant la deuxième lèvre 1B.

Il est cependant tout à fait envisageable que la forme du joint 1 corresponde à la rotation de la section transversale en U autour de l'axe X-X', l'âme du U, à partir de laquelle est généré le talon 1C, étant sensiblement parallèle à l'axe X-X'. Selon une telle variante, les lèvres du joint s'étendraient radialement de façon centripète.

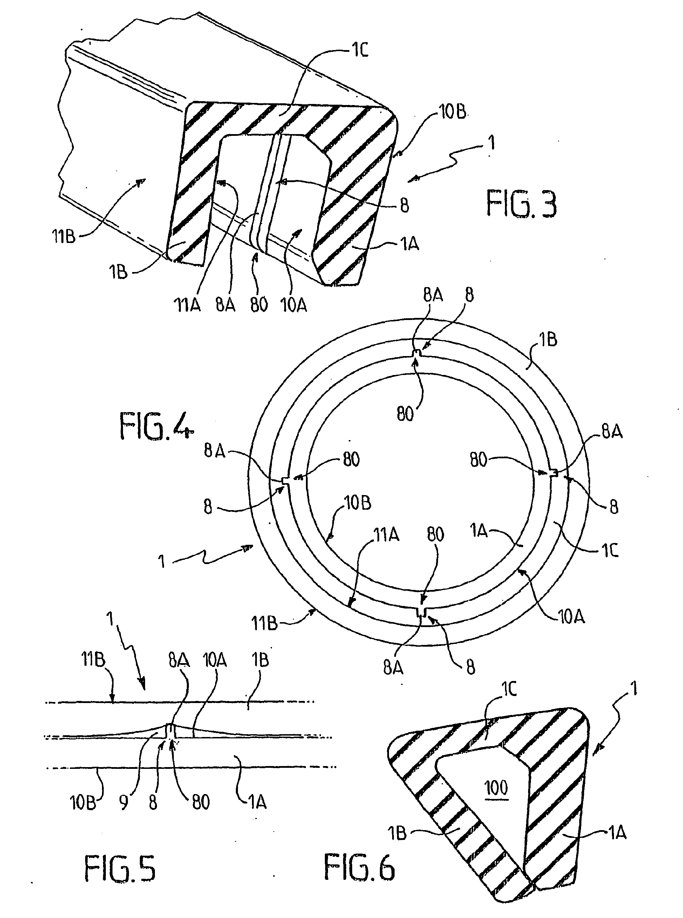

A l'instar des joints de l'art antérieur, les lèvres 1A, 1B et talon 1C du joint 1 conforme à l'invention sont susceptibles de définir un espace interstitiel fermé 100 lorsque les lèvres 1A, 1B sont amenées l'une contre l'autre, par exemple sous l'effet d'une mise en dépression de l'enceinte (cf. figure 6).

Selon une caractéristique importante du joint 1 conforme à l'invention, ce dernier comporte au moins une discontinuité géométrique 80 susceptible de ménager, lorsque les lèvres 1A, 1B sont amenées l'une contre l'autre, au moins un canal 9, 90 de mise en communication dudit espace interstitiel 100 avec l'extérieur.

En d'autres termes, la discontinuité 80 vient rompre ponctuellement la régularité géométrique du joint 1, et en particulier modifier localement le contour de la section transversale du joint 1. La section transversale du joint 1 peut être ainsi avantageusement identifiée à la continuité géométrique du joint 1, continuité qui est rompue par la présence de la discontinuité géométrique 80.

La discontinuité géométrique 80 est donc une singularité de conformation du joint 1 qui permet d'empêcher que les lèvres 1A, 1B ne s'épousent uniformément et continûment lorsqu'elles sont plaquées l'une contre l'autre sous l'effet d'une sollicitation extérieure, générée par exemple par une dépression.

La discontinuité géométrique 80 permet ainsi d'assurer la présence d'un ou plusieurs interstices de fuite à l'interface de contact des lèvres 1A, 1B lorsque ces dernières sont « *collées* » l'une contre l'autre.

Grâce à la présence de la discontinuité géométrique 80, l'espace interstitiel 100 n'est jamais en mesure de devenir étanche, comme cela pouvait survenir dans l'art antérieur. Cela évite qu'un éventuel « *collage* » des lèvres 1A, 1B ne se prolonge après que la dépression a disparu.

La discontinuité géométrique 80 est avantageusement située sur le joint 1 de façon à se trouver à l'interface de contact des lèvres 1A, 1B lorsque ces dernières sont ramenées l'une contre l'autre, par exemple sous l'effet d'une mise en dépression de l'enceinte.

De façon préférentielle, la discontinuité géométrique est une discontinuité par ajout(s) ou enlèvement(s) de matière. Plus précisément, la discontinuité résulte avantageusement d'ajouts localisé(s) ou d'enlèvement(s) localisé(s) de matière dans le joint 1 lui-même, par exemple au niveau d'une ou plusieurs lèvres 1A, 1C, ou du talon 1C.

Selon une première option de conception, correspondant aux variantes des figures 2 à 7, la discontinuité géométrique 80 comprend un moyen de maintien à distance 8 desdites première et deuxième lèvres 1A, 1B l'une relativement à l'autre, ledit moyen 80 étant interposé entre les première et deuxième lèvres 1A, 1B de façon à empêcher, au moins localement (c'est-à-dire au moins sur une portion de leur périmètre), que lesdites lèvres 1A, 1B ne puissent se plaquer l'une contre l'autre.

La fonction du moyen de maintien à distance 8 est donc de garantir en permanence, au moins localement, la présence d'un écartement minimum entre les lèvres 1A, 1B. Ainsi, quand bien même les lèvres 1A, 1B viendraient à être plaquées l'une contre l'autre sous l'effet d'une mise en dépression de l'enceinte de cuisson, un intervalle formant canal 9 (cf. figure 5) serait systématiquement ménagé en certains points du joint 1, de façon à empêcher que les lèvres 1A, 1B ne soient plaquées continûment et uniformément sur tout leur périmètre l'une contre l'autre, ce qui pourrait conduire à la création d'une chambre étanche entre les lèvres 1A, 1B et le talon 1C.

Avantageusement, le moyen de maintien à distance 8 comprend au moins un bourrelet local de matière 8A, situé dans l'intervalle séparant les lèvres 1A, 1B lorsque le joint 1 est au repos. De façon préférentielle, chaque bourrelet local 8A vient de matière avec la première lèvre 1A et/ou la deuxième lèvre 1B. En d'autres termes, chaque bourrelet local 8A est avantageusement fabriqué simultanément avec la lèvre dont il est issu.

De manière préférentielle, tel que cela est illustré aux figures, le joint 1 comprend une pluralité de bourrelets locaux 8A, espacés, de préférence de manière régulière, les uns des autres. A titre d'exemple, dans le cas d'un joint 1 de forme annulaire circulaire, les bourrelets 8A peuvent être au nombre de quatre, espacées chacun d'un angle de 90° relativement à l'axe de symétrie du joint 1.

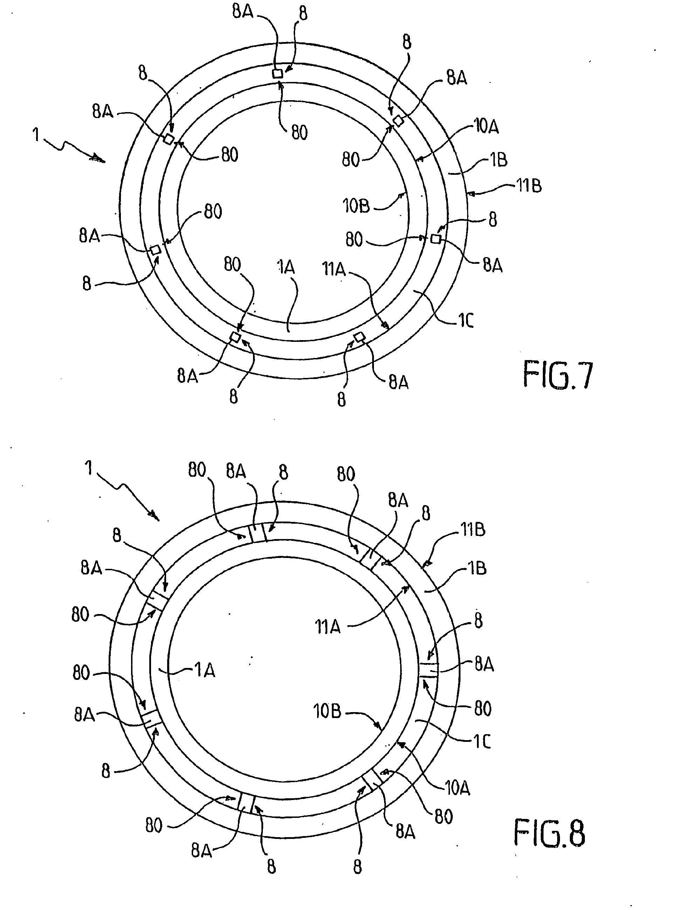

Avantageusement, chaque bourrelet local 8A forme une excroissance ou protubérance s'étendant à partir de la première lèvre 1A (ou de la deuxième lèvre 1B) en direction de la deuxième lèvre 1B (respectivement de la première lèvre 1A), tel que cela est illustré aux figures 4 et 7.

Dans le cas de la variante de réalisation illustrée aux figures 2 à 5, chaque bourrelet local 8A fait saillie à partir de la première lèvre 1A en direction de la deuxième lèvre 1B mais sans être en contact avec cette dernière lorsque le joint 1 est au repos, c'est-à-dire lorsqu'il n'est pas sollicité mécaniquement. Un éventuel contact ne se produit que lorsque les lèvres 1A, 1B sont plaquées l'une contre l'autre sous l'effet par exemple d'une mise en dépression de l'enceinte. Dans cette configuration, illustrée à la figure 5, chaque bourrelet local 8A est dimensionné pour ménager entre chaque lèvres 1A, 1B, un interstice local 9 de taille suffisante pour permettre la mise en communication de l'espace interstitiel avec l'extérieur, et empêcher ainsi un « *collage* » irréversible des lèvres 1A, 1B, c'est-à-dire un « *collage* » qui perdure lorsque les conditions de dépression ont disparues.

De façon préférentielle, tel que cela est illustré aux figures 2 à 5, chaque bourrelet 8A est formé par une nervure s'étendant sur la face interne 10A de la première lèvre 1A, c'est-à-dire la surface située en regard de la deuxième lèvre 1B.

Dans ce qui suit, pour des raisons de simplicité de description, on se limitera à décrire des nervures issues de la première lèvre 1A, étant entendu qu'il est tout à fait envisageable, sans pour autant sortir du cadre de l'invention, que lesdites nervures soit issues indifféremment de l'une ou l'autre des premières et deuxième lèvres 1A, 1B.

De manière préférentielle, chaque nervure s'étend, à partir du talon 1C, sur sensiblement toute la longueur de la première lèvre 1A en section transversale, tel que cela est plus particulièrement visible aux figures 2 et 3. Il est cependant tout à fait envisageable que chaque nervure ne s'étende que sur une portion de la longueur de la première lèvre 1A, vers l'extrémité libre de cette dernière, c'est à dire vers l'extrémité opposée à l'extrémité de jonction avec le talon 1C.

La demanderesse a ainsi mis en évidence que la présence de simples nervures, c'est-à-dire de minces lignes saillantes à la surface de l'une ou l'autre des lèvres 1A, 1B, pouvait suffire à empêcher le phénomène de « *collage* » des lèvres décrit précédemment de se produire, c'est à dire empêcher la création d'une chambre sensiblement étanche entre les lèvres 1A, 1B et le talon 1C.

Dans le cas de la variante illustrée à la figure 7, chaque bourrelet local 8A forme une entretoise entre chaque lèvre 1A, 1B. En d'autres termes, dans cette variante, chaque bourrelet 8A relie directement la première lèvre 1A et la deuxième lèvre 1B, et forme ainsi un pont de matière entre chaque lèvre.

Dans une autre variante de réalisation, représentée à la figure 5, chaque bourrelet local de matière 8A s'étend entre les lèvres 1A, 1B, à partir du talon 1C, mais sans être en contact avec aucune desdites lèvres 1A, 1B lorsque le joint 1 est au repos. Dans cette variante, le moyen de maintien à distance 8 est ainsi solidaire uniquement du talon 1C, et est indépendant des lèvres 1A, 1B.

Selon une deuxième option de conception, correspondant à la variante illustrée aux figures 8 à 10, la discontinuité géométrique 80 comprend non pas un élément saillant et convexe, tel qu'un bourrelet, mais au contraire un élément en creux, concave, tel qu'une gorge.

Plus précisément, chaque lèvre 1A, 1B présentant respectivement une face interne 10A, 11A et une face externe opposée 10B, 11B, les faces internes 10A, 11A étant en vis-à-vis l'une de l'autre, la discontinuité géométrique 80 comprend au moins une cannelure 80A ménagée dans la face interne 10A, 11A de l'une des lèvres 1A, 1B.

Tel que cela est représenté aux figures, la cannelure 80A débouche à l'extrémité libre (*i.e.* opposée à l'extrémité de jonction avec le talon) de la lèvre 1A dans laquelle elle est ménagée, et est dimensionnée de manière suffisante pour la ventilation de l'espace inter-lèvres quelle que soit la position relative desdites lèvres.

La cannelure 80A forme ainsi une tranchée, ou rainure, s'étendant superficiellement sur la face interne 10A, c'est à dire sur une fraction seulement de l'épaisseur de la lèvre 1A concernée.

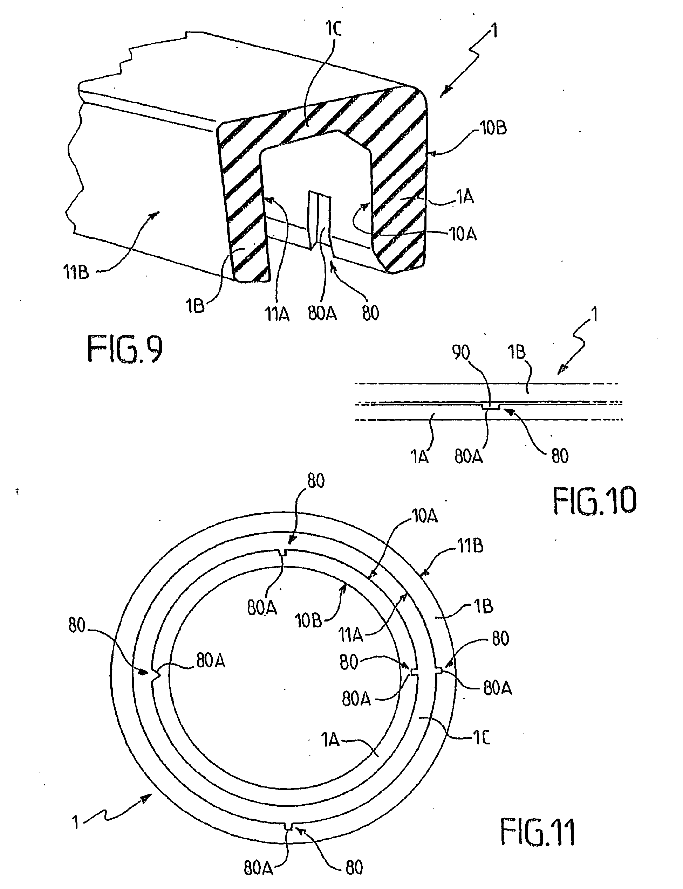

La cannelure 80A peut présenter tout type de section transversale, et par exemple une section transversale rectangulaire, triangulaire (cf. figure 11, à gauche sur le dessin), courbe, cette liste n'étant bien entendu nullement limitative.

Il est également envisageable de prévoir que les cannelures 80A soient ménagées par paires correspondantes sur chaque lèvre 1A, 1B, tel que cela est visible sur la figure 10, à droite sur le dessin. Dans ce cas, le canal 90 est formé par la coopération de deux cannelures situées en regard l'une de l'autre.

Le fonctionnement de l'invention est le suivant.

Tout d'abord, l'utilisateur insère le couvercle 2 dans la cuve 1. La coopération du premier bord 2B avec la face interne 30 de la cuve 3 permet un autoguidage du couvercle 2 relativement à la cuve 3.

De surcroît, lors de l'insertion, le contact entre le couvercle 2 et la cuve 3 se fait uniquement entre le bord tombant latéral 2B et la paroi latérale 3A de la cuve 3, le joint 1 n'adhérant pas à la cuve 3, ce qui facilite l'introduction du couvercle 2.

Une fois le couvercle 2 inséré, la deuxième lèvre 1B vient se plier contre la face interne 30 de la paroi latérale 3A. L'utilisateur procède alors au verrouillage du couvercle 2 sur la cuve 3, à l'aide par exemple d'un mécanisme de verrouillage à mâchoires 40, bien connu en tant que tel. Dans cette configuration de verrouillage, le joint 1 est écrasé entre le troisième bord 7 et la face interne 30 de la paroi interne 3A. Il assure ainsi l'étanchéité de l'enceinte formée par la cuve 3 et le couvercle 2, grâce aux contacts étanches réalisés respectivement par la première lèvre sur le troisième bord 7 d'une part et la deuxième lèvre 1B sur la face interne 30 de la paroi latérale 3A d'autre part. :

L'appareil 4 peut ainsi monter sous pression, jusqu'à atteindre son niveau de pression de régulation. Pendant cette phase de montée en pression et de cuisson sous pression, l'étanchéité est maintenue grâce à la flexibilité des lèvres 1A, 1B, qui accommodent ou compensent tout déplacement ou déformation du couvercle 2 et/ou de la cuve 3 pouvant survenir sous l'effet de la montée en pression.

Dans le cas où l'utilisateur refroidit l'appareil, par exemple en le plaçant sous un jet d'eau froide et ce sans avoir auparavant mis en communication l'intérieur de l'enceinte avec l'extérieur, un phénomène de dépression peut se produire à l'intérieur de l'enceinte.

Sous l'effet de cette dépression, le couvercle 2 va être « *aspiré* » à l'intérieur de la cuve 3, en direction du fond 3A, selon sensiblement la direction verticale. Sous l'effet de cette aspiration, les première et deuxième lèvres 1A, 1B vont venir se plaquer l'une contre l'autre.

Cependant, grâce à la présence du moyen de maintien à distance 8 formé par les nervures issues de la première lèvre 1A, des interstices locaux 9 vont être ménagés en permanence entre lesdites lèvres, empêchant la création d'une chambre dépressionnaire dans l'espace interstitiel 100.

Le principe est analogue dans le cas où, en lieu et place (ou en complément) du moyen de maintien à distance 8 est prévu une (ou plusieurs) cannelure(s) 80A, à la différence près que dans ce cas, ce sont les cannelures elles-mêmes qui forment directement les canaux 90.

Par conséquent, lorsque le couvercle 2 pourra être retiré hors de la cuve 3 par l'utilisateur, après que ce dernier a mis en communication l'intérieur de l'enceinte avec l'extérieur, le joint 1 retrouvera automatiquement, par un effet bien connu de retour élastique ou « *mémoire de forme* », sa conformation de repos habituel, en forme de U selon la section transversale.

L'utilisateur disposera ainsi d'un appareil 4 prêt à être utilisé de nouveau, le joint 1 n'ayant conservé sensiblement aucune trace de son passage en dépression.

### POSSIBILITE D'APPLICATION INDUSTRIELLE

L'invention trouve son application industrielle dans la fabrication de joints d'étanchéité pour appareils domestiques de cuisson et en particulier pour appareils de cuisson sous pression, du genre autocuiseurs.

## Revendications

1. - Joint à lèvres (1) destiné à être monté entre le couvercle (2) et la cuve (3) d'un appareil de cuisson (4) pour assurer l'étanchéité entre lesdits couvercle (2) et cuve (3), ledit joint (1) comprenant au moins une première et une deuxième lèvres (1A, 1B) reliées par un talon (1C), lesdits lèvres (1A, 18) et talon (1C) étant susceptibles de définir, lorsque les lèvres (1A, 1B) sont amenées l'une contre l'autre, un espace interstitiel fermé (100), ledit joint (1) comportant au moins une discontinuité géométrique (80) susceptible de ménager, lorsque les lèvres (1A, 1B) sont amenées l'une contre l'autre, au moins un canal (9, 90) de mise en communication dudit espace interstitiel (100) avec l'extérieur, ladite discontinuité (80) étant située sur le joint (1) de façon à se trouver à l'interface de contact des lèvres (1A, 1B) lorsque ces denières sont ramenées l'une contre l'autre.

2. - Joint (1) selon la revendication 1 **caractérisé en ce que** ladite discontinuité géométrique (80) est une discontinuité par ajout(s) ou enlèvement(s) de matière.

3. - Joint (1) selon la revendication 1 ou 2 **caractérisé en ce que** la discontinuité géométrique (80) comprend un moyen de maintien à distance (8) des première et deuxième lèvres (1A, 1B) l'une relativement à l'autre, ledit moyen (80) étant interposé entre lesdites première et deuxième lèvres (1A, 1B) de façon à empêcher, au moins localement, que lesdites lèvres (1A, 1B) ne puissent se plaquer l'une contre l'autre.

4. - Joint (1) selon la revendication 3 **caractérisé en ce que** le moyen de maintien à distance (80) comprend au moins un bourrelet local (8A) de matière.

5. - Joint (1) selon la revendication 4 **caractérisé en ce que** chaque bourrelet local (8A) forme une excroissance s'étendant à partir de la première lèvre (1A) en direction de la deuxième lèvre (1B).

6. - Joint (1) selon la revendication 5 **caractérisé en ce que** chaque bourrelet local (8A) est formé par une nervure.

7. - Joint (1) selon la revendication 6 **caractérisé en ce que** chaque nervure s'étend, à partir du talon (1C), sur sensiblement toute la longueur de la première lèvre (1A) en section transversale.

8. - Joint (1) selon l'une des revendications 4 à 7 **caractérisé en ce que** chaque bourrelet local (8A) vient de matière avec la première lèvre (1B).

9. - Joint (1) selon l'une des revendications 4 à 8 **caractérisé en ce qu'**il comprend une pluralité de bourrelet locaux (8A), espacés les uns des autres.

10. -Joint (1) selon la revendication 1 ou 2 **caractérisé en ce que** chaque lèvre (1A, 1B) présente respectivement une face interne et une face externe opposée, les faces internes de chaque lèvre (1A, 1B) étant en vis-à-vis l'une de l'autre, la discontinuité géométrique (80) comprenant au moins une cannelure (80A), ménagée dans la face interne de l'une des lèvres (1A, 1B).

11. -Joint (1) selon l'une des revendications 1 à 10 **caractérisé en ce que** la cuve (3) s'étendant selon une direction axiale (X-X') entre un fond (3B) et le couvercle (2), ledit joint (1) est conformé de telle sorte que lorsqu'il est monté entre lesdits couvercle (2) et cuve (3), les première et deuxième lèvres (1A, 1B) sont sensiblement orientées vers le fond (38) de la cuve (3).

12. -Joint (1) selon l'une des revendications 1 à 11 **caractérisé en ce qu'**il présente une section transversale sensiblement en forme de U, les bras du U formant chacun respectivement les première et deuxième lèvres (1A, 1B), l'âme du U formant le talon (1C).

13. -Joint (1) selon l'une des revendications 1 à 12 **caractérisé en ce qu'**il présente une forme générale annulaire.

14. -Joint (1) selon les revendications 12 et 13 **caractérisé en ce qu'**il présente sensiblement une forme générale de révolution, correspondant à la rotation de la section transversale en U autour d'un axe de révolution (X-X') sensiblement parallèle au premier et/ou au deuxième bras du U.

15. -Appareil de cuisson (4) comportant d'une part une cuve (3) et un couvercle (2) destiné à être rapporté sur ladite cuve (3) pour former une enceinte de cuisson, et d'autre part un joint (1) conforme à l'une des revendications 1 à 13, ledit joint (1) étant monté entre lesdits cuve (3) et couvercle (2).

16. -Appareil (4) selon la revendication 15 **caractérisé en ce que** le couvercle (2) comprend un bord tombant latéral (2B), tandis que la cuve (3) comprend un fond (3B) à partir duquel s'élève une paroi latérale (3A) jusqu'à un rebord d'entrée (3C), lesdits couvercle (2) et cuve (3) étant agencés pour que lorsque le couvercle (2) est rapporté sur la cuve (3), la paroi latérale (3A) entoure le bord tombant latéral (28), ledit joint (1) étant interposé entre le bord tombant latéral (2B) et la paroi latérale (3A).

17. -Appareil de cuisson (4) conforme à la revendication 15 ou 16 **caractérisé en ce qu'**il constitue un appareil de cuisson sous pression.

## Claims

1. A lip gasket (1) designed to be mounted between the lid (2) and the bowl (3) of a cooking appliance (4) for the purpose of providing sealing between said lid (2) and said bowl (3), said gasket (1) comprising at least first and second lips (1A, 1B), interconnected by a heel (1C), said lips (1A, 1B) and said heel (1C) being such that, when the lips (1A, 1B) are brought together, they are suitable for defining a closed interstitial space (100), said gasket (1) being provided with at least one geometrical discontinuity (80) suitable for acting, when the lips (1A, 1B) are brought together, to provide at least one path (9, 90) for putting said interstitial space (100) into communication with the outside, said discontinuity (80) being situated on the gasket (1) so as to find itself at the contact interface between the lips (1A, 1B) when said lips are brought together.

2. A gasket (1) according to claim 1, **characterized in that** said geometrical discontinuity (80) is a discontinuity due to addition or removal of material.

3. A gasket (1) according to claim 1 or 2, **characterized in that** the geometrical discontinuity (80) comprises distance-keeper means (8) for keeping the first and second lips (1A, 1B) apart from each other, said means (80) being interposed between said first and second lips (1A, 1B) so as to prevent said lips (1A, 1B) from being pressed together, at least locally.

4. A gasket (1) according to claim 3, **characterized in that** the distance-keeper means (80) comprise at least one local bead (8A) of material.

5. A gasket (1) according to claim 4, **characterized in that** each local bead (8A) forms a projection extending from the first lip (1A) towards the second lip (1B).

6. A gasket (1) according to claim 5, **characterized in that** each local bead (8A) is formed by a rib.

7. A gasket (1) according to claim 6, **characterized in that** each rib extends from the heel (1C) over substantially the entire length of the first lip (1A) in cross-section.

8. A gasket (1) according to any one of claims 4 to 7,
**characterized in that** each local bead (8A) is formed integrally with the first lip (1B).

9. A gasket (1) according to any one of claims 4 to 8,
**characterized in that** it is provided with a plurality of local beads (8A) that are spaced apart from one another.

10. A gasket (1) according to claim 1 to 2, **characterized**
**in that** each lip (1A, 1B) respectively has an inside face and opposite outside face, the inside faces of the lips (1A, 1B) facing each other, the geometrical discontinuity (80) comprising at least one notch (80A) provided in the inside face of one of the lips (1A, 1B).

11. A gasket (1) according to any one of claims 1 to 10,
**characterized in that**, with the bowl (3) extending in an axial direction (X-X') between a bottom (3B) and the lid (2), said gasket (1) is shaped such that, when it is mounted between said lid (2) and said bowl (3), the first and second lips (1A, 1B) extend substantially towards the bottom (3B) of the bowl (3).

12. A gasket (1) according to any one of claims 1 to 11,
**characterized in that** it is substantially of channel section, the flanges of the channel section forming respective ones of the first and second lips (1A, 1B), the web of the channel section forming the heel (1C).

13. A gasket (1) according to any one of claims 1 to 12, **characterized in that** it is substantially annular in shape.

14. A gasket (1) according to claim 12 and claim 13,
**characterized in that** it is substantially circularly symmetrical in shape, corresponding to its section being rotated about an axis of circular symmetry (X-X') that is substantially parallel to the first flange and/or to the second flange of the channel section.

15. A cooking appliance (4) comprising firstly a bowl (3) and a lid (2) designed to be received on said bowl (3) so as to form a cooking enclosure, and secondly a gasket (1) according to any one of claims 1 to 13, said gasket (1) being mounted between said bowl (3) and said lid (2).

16. An appliance (4) according to claim 15, **characterized**
**in that** the lid (2) has a drop skirt (2B), while the bowl (3) has a bottom (3B) from which a side wall (3A) extends upwards to an entry rim (3C), said lid (2) and said bowl (3) being arranged so that, when the lid (2) is received on the bowl (3), the side wall (3A) surrounds the drop skirt (2B), said gasket (1) being interposed between the drop skirt (2B) and the side wall (3A).

17. A cooking appliance (4) according to claim 15 or claim 16, **characterized in that** it constitutes pressure-cooking appliance.

## Patentansprüche

1. Lippendichtung (1), die dazu bestimmt ist, zwischen dem Deckel (2) und dem Gefäß (3) eines Kochgerätes (4) angebracht zu werden, um die Dichtigkeit zwischen dem Deckel (2) und dem Gefäß (3) sicherzustellen, wobei die Dichtung (1) mindestens eine erste und eine zweite Lippe (1A, 1B) umfasst, die durch ein Ansatzstück (1C) verbunden sind, wobei die Lippen (1A, 1B) und das Ansatzstück (1C) in der Lage sind, wenn die Lippen (1A, 1B) zusammengeführt werden, einen geschlossenen Zwischenraum (100) zu definieren, wobei die Dichtung (1) mindestens eine geometrische Diskontinuität (80) aufweist, die in der Lage ist, wenn die Lippen (1A, 1B) zusammengeführt werden, mindestens einen Kanal (9, 90) zur Verbindung des Zwischenraums (100) mit dem Außenraum zu schaffen, wobei die Diskontinuität (80) derart an der Dichtung (1) angeordnet ist, dass sie sich an der Kontaktgrenzfläche der Lippen (1A, 1B) befindet, wenn diese letzteren zusammengeführt werden.

2. Dichtung (1) nach Anspruch 1, **dadurch gekennzeichnet, dass** die geometrische Diskontinuität (80) eine Diskontinuität infolge von Zusatz (Zusätzen) oder Abtragung(en) von Material ist.

3. Dichtung (1) nach Anspruch 1 oder 2, **dadurch gekennzeichnet, dass** die geometrische Diskontinuität (80) ein Mittel zum Abstandhalten (8) der ersten und zweiten Lippe (1A, 1B) relativ zueinander umfasst, wobei das Mittel (80) zwischen der ersten und zweiten Lippe (1A, 1B) derart angeordnet ist, dass es wenigstens lokal verhindert, dass die Lippen (1A, 1B) aneinander gedrückt werden können.

4. Dichtung (1) nach Anspruch 3, **dadurch gekennzeichnet, dass** das Mittel zum Abstandhalten (80) mindestens eine lokale Wulst (8A) von Material umfasst.

5. Dichtung (1) nach Anspruch 4, **dadurch gekennzeichnet, dass** jede lokale Wulst (8A) einen Auswuchs bildet, der sich ausgehend von der ersten Lippe (1A) in Richtung der zweiten Lippe (1B) erstreckt.

6. Dichtung (1) nach Anspruch 5, **dadurch gekennzeichnet, dass** jede lokale Wulst (8A) durch eine Rippe gebildet wird.

7. Dichtung (1) nach Anspruch 6, **dadurch gekennzeichnet, dass** jede Rippe, ausgehend von dem Ansatzstück (1C), sich im Wesentlichen über die gesamte Länge der ersten Lippe (1A) im Querschnitt erstreckt.

8. Dichtung (1) nach einem der Ansprüche 4 bis 7, **dadurch gekennzeichnet, dass** jede lokale Wulst (8A) mit der ersten Lippe (1B) aus einem Stück besteht.

9. Dichtung (1) nach einem der Ansprüche 4 bis 8, **dadurch gekennzeichnet, dass** sie mehrere lokale Wülste (8A) umfasst, die voneinander beabstandet sind.

10. Dichtung (1) nach Anspruch 1 oder 2, **dadurch gekennzeichnet, dass** jede Lippe (1A, 1B) jeweils eine Innenseite und eine gegenüberliegende Außenseite aufweist, wobei die Innenseiten der Lippen (1A, 1B) einander gegenüberliegen, wobei die geometrische Diskontinuität (80) mindestens eine Rille (80A) umfasst, die in der Innenseite einer der Lippen (1A, 1B) vorgesehen ist.

11. Dichtung (1) nach einem der Ansprüche 1 bis 10, **dadurch gekennzeichnet, dass,** während das Gefäß (3) sich in einer axialen Richtung (X-X') zwischen einem Boden (3B) und dem Deckel (2) erstreckt, die Dichtung (1) derart gestaltet ist, dass, wenn sie zwischen dem Deckel (2) und dem Gefäß (3) angebracht ist, die erste und zweite Lippe (1A, 1B) im Wesentlichen zum Boden (3B) des Gefäßes (3) gerichtet sind.

12. Dichtung (1) nach einem der Ansprüche 1 bis 11, **dadurch gekennzeichnet, dass** sie einen im Wesentlichen U-förmigen Querschnitt aufweist, wobei die Schenkel des U-Profils die erste bzw. zweite Lippe (1A, 1B) bilden, während der Steg des U-Profils das Ansatzstück (1C) bildet.

13. Dichtung (1) nach einem der Ansprüche 1 bis 12, **dadurch gekennzeichnet, dass** sie eine ringförmige allgemeine Form aufweist.

14. Dichtung (1) nach den Ansprüchen 12 und 13, **dadurch gekennzeichnet, dass** sie im Wesentlichen eine allgemeine Rotationsform aufweist, die der Rotation des U-förmigen Querschnitts um eine Rotationsachse (X-X') entspricht, die im Wesentlichen parallel zum ersten und/oder zum zweiten Schenkel des U-Profils ist.

15. Kochgerät (4), das einerseits ein Gefäß (3) und einen Deckel (2), der dazu bestimmt ist, auf das Gefäß (3) aufgesetzt zu werden, um einen Kochraum zu bilden, und andererseits eine Dichtung (1) nach einem der Ansprüche 1 bis 13 aufweist, wobei die Dichtung (1) zwischen dem Gefäß (3) und dem Deckel (2) angebracht ist.

16. Gerät (4) nach Anspruch 15, **dadurch gekennzeichnet, dass** der Deckel (2) einen abfallenden Seitenrand (2B) umfasst, während das Gefäß (3) einen Boden (3B) umfasst, von dem aus sich eine Seitenwand (3A) bis zu einem Eintritts-Umschlag (3C) erhebt, wobei der Deckel (2) und das Gefäß (3) so ausgebildet sind, dass, wenn der Deckel (2) auf das Gefäß (3) aufgesetzt wird, die Seitenwand (3A) den abfallenden Seitenrand (2B) umgibt, wobei die Dichtung (1) zwischen dem abfallenden Seitenrand (2B) und der Seitenwand (3A) eingelegt ist.

17. Kochgerät (4) nach Anspruch 15 oder 16, **dadurch gekennzeichnet, dass** es ein Druckkochgerät darstellt
